(19) Europäisches Patentamt
European Patent Office
Office européen des brevets

(11) EP 0 498 656 B1

(12) EUROPEAN PATENT SPECIFICATION

(45) Date of publication and mention
of the grant of the patent:
04.09.1996 Bulletin 1996/36

(51) Int Cl.⁶: **H04N 7/30**

(21) Application number: 92301032.6

(22) Date of filing: 07.02.1992

(54) **Encoding video signals**

Kodierung von Videosignalen

Codage des signaux à vidéo

(84) Designated Contracting States:
**DE FR GB**

(30) Priority: 08.02.1991 JP 39349/91

(43) Date of publication of application:
12.08.1992 Bulletin 1992/33

(73) Proprietor: **SONY CORPORATION**
**Tokyo 141 (JP)**

(72) Inventor: **Fujinami, Yasushi,**
**c/o Patents Division Sony Corp.**
**Tokyo 141 (JP)**

(74) Representative:
**Robinson, Nigel Alexander Julian et al**
**D. Young & Co.,**
**21 New Fetter Lane**
**London EC4A 1DA (GB)**

(56) References cited:
EP-A- 0 084 270          EP-A- 0 409 310
EP-A- 0 435 163          US-A- 4 797 945

• PATENT ABSTRACTS OF JAPAN vol. 13, no. 128
(E-735)29 March 1989 & JP-A-63 296 583
• PATENT ABSTRACTS OF JAPAN vol. 7, no. 88
(E-170)(1233) 12 April 1983 & JP-A-58 014 688

**Description**

This invention relates to apparatus and methods for encoding input video signals. More particularly, this invention relates to such apparatus and methods for compressing the data within an input video signal.

A variety of encoding apparatus for compressing data of a video signal have been previously proposed. For example, a highly efficient encoding apparatus is proposed in Japanese Laid-open Patent Publication JP-A-6292620. This uses a technique for adaptively quantizing picture data.

The Moving Picture Experts Group (MPEG) has recommended a data compression system with respect to moving pictures. In this recommendation, one frame picture is formed of 240 lines in the vertical scanning direction, each line being formed of 352 picture elements, and each frame being divided into macro blocks MB formed of 16 picture elements x 16 picture elements. Thus, one frame picture is formed of 22 macro blocks MB in the horizontal scanning direction and 15 macro blocks MB in the vertical scanning direction.

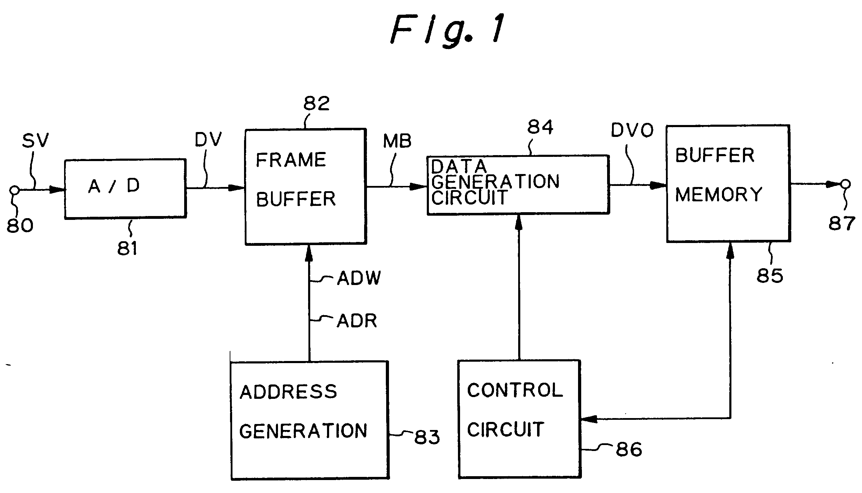

Figure 1 shows a circuit construction of an encoding apparatus using discrete cosine transformation (DCT).

A video signal SV is supplied to an A/D converter 81 through a terminal 80. The AID converter 81 converts the video signal SV into video data DV. The video data DV is supplied to a frame buffer 82.

An address generator 83 forms a write address ADW. The write address ADW is supplied to the frame buffer 82.

The video data DV is written to the frame buffer 82 in accordance with the above mentioned write address ADW. With respect to the video data DV written to the frame buffer 82, each frame is formed of 240 lines (that is, 240 picture elements) in the vertical scanning direction and each line is formed of 352 picture elements.

The address generator 83 forms a read address ADR. The read address ADR is supplied to the frame buffer 82.

The frame buffer 82 reads the video data DV in accordance with the above mentioned read address ADR. The video data DV is read from the frame buffer 82 macro block MB by macro block MB, each of which is formed of 16 picture elements x 16 picture elements. The video data DV which is read macro block MB by macro block MB is supplied to a data generation circuit 84.

The data generation circuit 84 divides each macro block MB into blocks formed of eight picture elements x eight picture elements. Thus, one macro block MB is divided into four blocks.

The video data DV is then DCT-processed, block by block, quantized and converted into codes with a variable length. The video data is thereby compressed to form new video data DV0. The video data DV0 is then written to a buffer memory 85, from where it is later read in succession. Thereafter, the video data DV0 is supplied or transmitted to the following circuit through a terminal 87.

A control circuit 86 monitors the capacity of write enabled areas of the buffer memory 85 so as to prevent the buffer memory 85 from overflowing with video data DV0. This is done by controlling a data generation parameter frame by frame or multiple frames (for example, 15 frames by 15 frames). The amount of data which is generated does not become quite constant since a macro block MB of a non-complicated pattern generates a small amount of data, while that of a complicated pattern generates a large amount of data.

As an example of a method for monitoring the capacity of the write enabled areas, a value of a write address counter and a value of a read address counter in the buffer memory 85 may be used. The buffer memory 85, the control circuit 86, and the data generation circuit 84 can be configured to form a feed-back loop.

The prior art shown in Figure 1 has the following problems.

(1) When a picture has a complicated pattern portion, for example a portion with many edges, this portion causes a large amount of data to be generated. In this case, the feed-back loop formed of the buffer memory 85, the control circuit 86, and the data generation circuit 84 operates and control is performed to decrease the amount of data which is generated. However, since the feed-back loop has a delay, when a simple pattern follows a complicated pattern and control as mentioned above is performed, the picture quality of the simple pattern is unnecessarily deteriorated.

(2) Since the control by the feed-back loop formed of the buffer memory 85, the control circuit 86, and the data generation circuit 84 is always accompanied by a delay, when a large amount of data is abruptly generated, as in the case of the above mentioned portion with a complicated pattern, the buffer memory 85 is likely to be overflown.

EP-A-0 435 163 (relevant for novelty purposes only under Article 54(3) EPC) discloses a coding apparatus for digital image data using an orthogonal transform, quantization and variable length coding on a block by block basis and varying the quantization step width on the basis of the detected nature of the blocks.

US-A-4 797 945 discloses a coding apparatus for digital image data in which vector quantization is controlled in accordance with the detected number of edges within an image block.

JP-A-63296583 discloses a coding apparatus for digital image data in which the degree of subsampling is varied in dependence upon the detected number of edges in the image, an increase in the number of edges resulting in an increase in the number of samples taken. This invention is concerned with the problem of providing an encoding apparatus that improves picture quality and reduces data overflow.

According to one aspect of this invention, there is provided an apparatus for encoding an input video signal, the apparatus comprising: means for dividing each frame of the input video signal into blocks with a predetermined size;

an orthogonal transform circuit for transforming the signal values within the blocks into transformed coefficients means for sequentially performing, block by block, a thresholding process with a threshold level below which said transformed coefficients are substituted with zeros, then a quantizing process with a quantization step width and then an encoding process upon the blocks, the threshold level and the quantization step width varying in accordance with the input video signal to control the amount of encoded data which is generated; and

means for determining, block by block, the complication of the pattern within the blocks, the threshold level and the quantization step width for a given block being varied in accordance with the result of the determination for said given block by the means for determining.

According to another aspect of this invention there is provided a method of encoding an input video signal, the method comprising the steps of:

dividing each frame of the input video signal into blocks with a predetermined size;

performing an orthogonal transform on the signal values within the blocks to form transformed coefficients;

sequentially performing, block by block, a thresholding process with a threshold level below which said transformed coefficients are substituted with zeros, then a quantizing process with a quantization step width and then an encoding process upon the blocks, the threshold level and the quantization step width varying in accordance with the input video signal to control the amount of encoded data that is generated; and

determining, block by block, the complication of the pattern within the blocks, the threshold level and the quantization step width used for a given block being varied in accordance with the result of the determination for said given block.

The invention will now be described by way of example with reference to the accompanying drawings, throughout which like parts are referred to by like references, and in which:

Figure 1 is a block diagram showing a previously proposed encoding apparatus;
Figure 2 is a block diagram showing an encoding apparatus;
Figure 3 is a block diagram showing the detail of a frame buffer circuit;
Figure 4 is a schematic diagram showing the construction of a macro block;
Figure 5 is an example picture used to describe the embodiment and a schematic diagram showing the distribution of the amount of data;
Figure 6 is a schematic diagram showing an arrangement of a sample block;
Figure 7 is a schematic diagram showing edge detection within a sample block;
Figure 8 is a flow chart illustrating operation of the control circuit;
Figure 9 is a block diagram showing another encoding apparatus; and
Figure 10 is a block diagram showing a further encoding apparatus, which is an embodiment of the invention

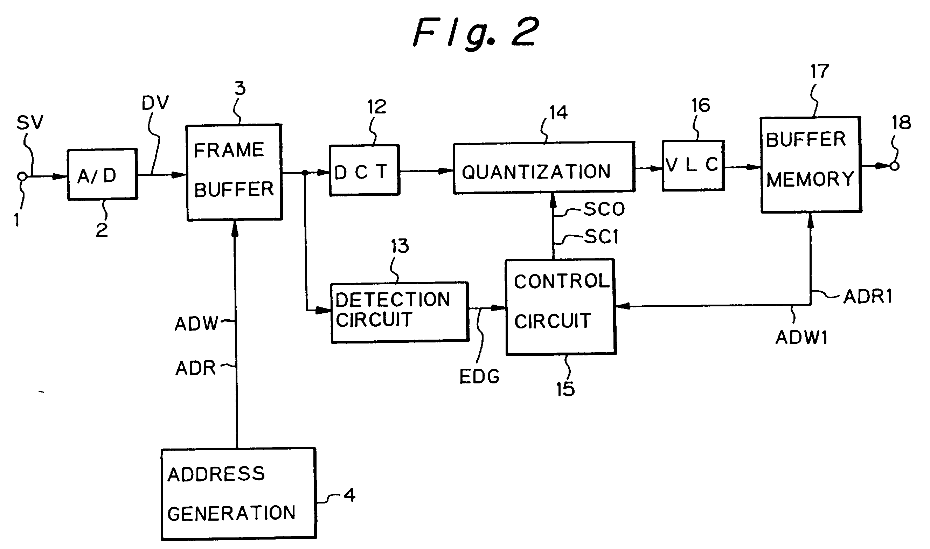

The first encoding apparatus is described with reference to Figures 2 to 8.

Before describing this encoding apparatus in detail, one way of viewing the basic concept of the operation of this encoding apparatus is presented.

In data compression of a video signal SV, data should be compressed so that the picture quality of the most important portions is not deteriorated. In other words, the best picture quality should be accomplished with a particular amount of data.

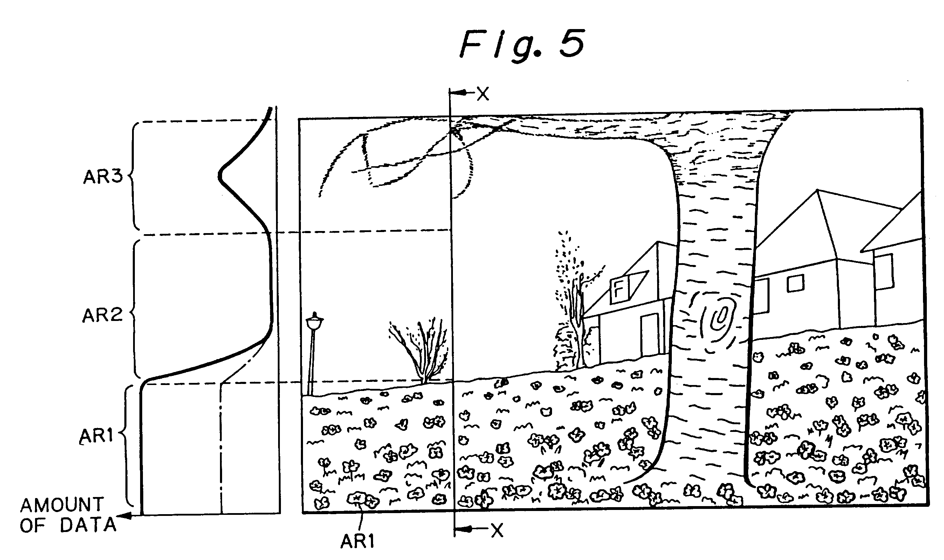

When a picture as shown in Figure 5 is encoded, the distribution of the amount of data which is generated along a section X is as represented by the schematic diagram on the left hand of the figure. As is clear from Figure 5, with respect to the amount of data which is generated along the section X, a part AR1 which is a flower bed represents the highest level; a part AR3 at an upper portion of the picture represents the second highest level; and a part AR2 in the middle of the picture represents the lowest level.

Since the flower bed part AR1 at the lower portion of the picture is comparatively complicated, the amount of data which is generated is large. However, the overall amount of data should be held constant. Therefore, in this condition, the amount of data which is generated in other than the flower bed part AR1 is suppressed and the picture quality of, for example, the part AR3 at the upper portion of the picture is deteriorated.

To solve this problem, it is necessary to suppress the amount of data which is generated at the flower bed part AR1 and to assign the surplus bits generated thereby to portions other than the flower bed part AR1.

It is generally true that even if the amount of data which is generated in a complicated portion such as the flower bed part AR1 is reduced by using a large quantizing step width, the deterioration of picture quality is not correspondingly sensed. In this coding apparatus, to reduce the likelihood that the picture quality of the part AR3 at the upper portion of the picture will be deteriorated, before an encoding process, such as DCT, is performed, portions with complicated patterns are predetected on a feed-forward basis and an information reduction parameter, such as quantisation step width, for these portion is increased. The amount of data which is generated in the complicated patterns is thereby suppressed. in contrast, with respect to the other portions, the quantizing step width is not changed since there is no detection of complicated patterns and therefore the amount of data which is generated is not suppressed. This operation is equivalent to assignment of surplus bits to portions other than complicated portions.

In the encoding apparatus shown in Figure 2, a video signal SV is supplied to an A/D converter 2 through a terminal 1. The A/D converter 2 converts the video signal SV into video data DV. The video data DV is supplied to a frame buffer circuit 3.

An address generator 4 forms a write address ADW. The write address ADW is supplied to the frame buffer circuit 3. The video data DV is written to the frame buffer circuit 3 in accordance with the write address ADW.

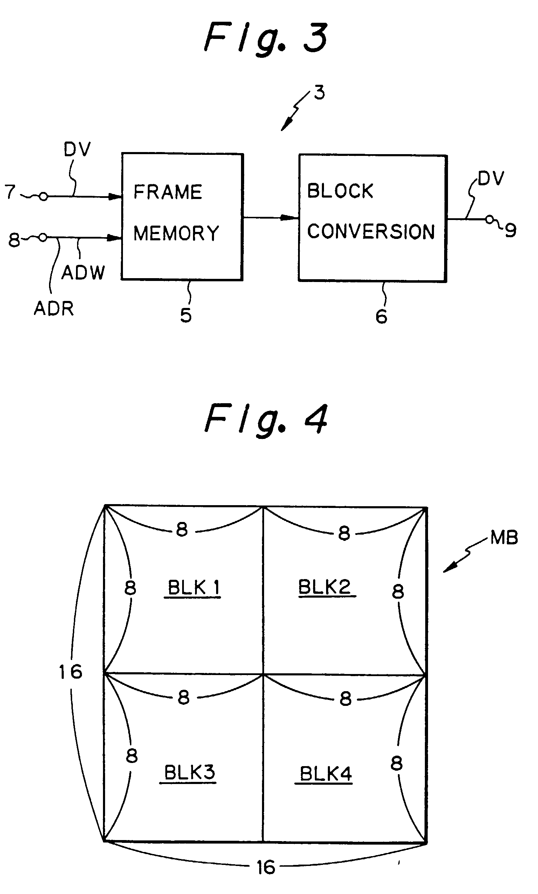

Figure 3 shows in more detail the construction of the frame buffer circuit 3.

As shown in Figure 3, the frame buffer circuit 3 chiefly comprises a frame memory 5 and a block conversion circuit 6.

The video data DV is supplied to the frame memory 5 through a terminal 7. In addition, a write address ADW is supplied to the frame memory 5 through a terminal 8. Thus, the video data DV is written in succession to an address specified by the write address ADW. The number of picture elements in one frame of the video data DV is 240 lines (that is, 240 picture elements) in the vertical scanning direction, as defined by the above mentioned MPEG, with each line being formed of 352 picture elements.

The address generator 4 forms a read address ADR. The read address ADR is supplied to the frame buffer circuit 3.

When the read address ADR is supplied to the frame memory 5 of the frame buffer circuit 5 through the terminal 8, the video data DV being stored is read and supplied to the block conversion circuit 6.

As shown in Figure 4, the block conversion circuit 6 divides macro blocks MB formed of 16 picture elements x 16 picture elements into blocks BLK1 to BLK4, each of which is formed of eight picture elements x eight picture elements. The video data DV is supplied to a DCT circuit 12 and a detection circuit 13 on a block by block basis (BLK1 to BLK4).

The DCT circuit 12 performs a DCT process upon the video data DV which is supplied to it block by block (BLK1 to BLK4) and forms a matrix of eight rows x eight columns (8 x 8) of conversion (transformed) coefficients which represent the spatial frequency components of the input picture. The conversion coefficients are supplied to a quantizing circuit 14.

The detection circuit 13 determines whether the video data DV supplied from the frame buffer circuit 3 is a complicated pattern or a non-complicated pattern on a macro block MB by macro block MB basis. This determination proceeds the processing of each macro block MB.

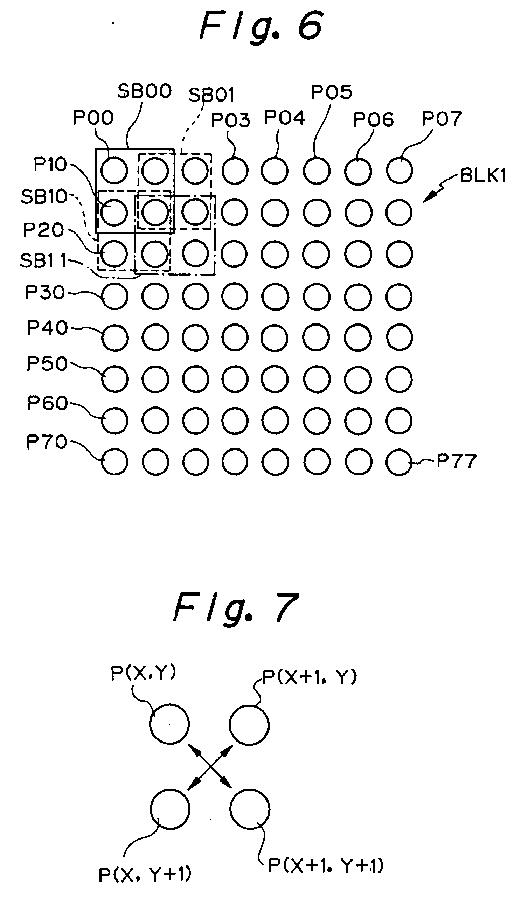

In this encoding apparatus, the determination of whether or not a pattern is complicated is made only with macro blocks MB of a luminance signal Y formed from blocks BLK1 to BLK4, each of which has 8 x 8 picture elements. This determination technique is described with reference to Figure 6. Since this determination technique is in common to all blocks BLK1 to BLK4, only block BLK1 is described in detail.

In Figure 6, Pxy (where x = 0, 1, ..., 7 and y = 0, 1, ...,7) are picture elements. In the block BLK1 there are forty nine sample blocks SBxy (where x = 0, 1, ..., 6 and y = 0, 1, ..., 6), each sample block SBxy being formed of 2 x 2 picture element Pxy. In individual adjacent sample blocks SBxy, one picture element P is overlapped.

In Figure 6, picture element data Yxy of the sample block SB is expressed with the following equation.

$$SB = \begin{matrix} Y(x\ y) & Y(x+1,\ y) \\ Y(x,\ y+1) & Y(x+1,\ y+1) \end{matrix} \qquad x=0,\ldots,(7-1),\ y=0,\ldots,(7-1)$$

The complication of a pattern is determined depending on whether or not a sample block SBxy is an edge. In order to detect an edge, the square of the difference of luminance levels of diagonal elements is used. In other words, with each sample block SBxy, two values are obtained. When the larger of these values is greater than, for example 4000, it is determined that the sample block SBxy includes an edge.

This edge detection may be expressed with the following equation. if max $[(Y(x\ y) - Y(x+1,\ Y+1))^2, (Y(x+1,\ y) - Y(x\ y+1))^2] > 4000$ then edge

One macro block MB is formed of, for example, 196 (= 4 x 49) sample blocks SBxy. If edges are detected in a predetermined number of sample blocks SBxy, for example 65 or more sample blocks SBxy, then it is determined that the macro block MB is a complicated pattern. At that time, the detection circuit 13 supplies to the control circuit 15 an edge detection signal EDG which is at a high level.

The basis of the determination of the complication of a pattern with the predetermined number of sample blocks SBxy (in this example 65 sample blocks SBxy) is described.

In this encoding apparatus, when the difference of luminance levels of diagonal elements is 25% or more of the dynamic range of luminance ($2^8 = 256$) (thus, $2^8 \times 0.25 = 64$), the sample block SBxy is determined to include an edge ($64^2 > 4000$).

In addition, when edges are detected from one third or more of sample blocks SBxy ($196 \times (1/3) > 65$), the macro blocks MB is determined to have a complicated pattern.

This criterion need not always be used. Rather, the criterion may vary depending on the contents of a picture and other conditions.

When an edge detection signal EDG which is at a high level is supplied from the detection circuit 13 to the control circuit 15, a control signal SC0 is formed in the control circuit 15 and supplied to the quantizing circuit 14. Alternatively, a control signal SC1 is formed in accordance with the capacity of write enabled areas of the buffer memory 17 and supplied to the quantizing circuit 14. As methods for detecting the capacity of the write enabled areas of the buffer memory 17 in the control circuit 15, it is also possible to use a technique using the numbers of items of data which are written and read in addition to the above mentioned using the value of the write address counter and the value of the read address counter. Thus, the likelihood of an overflow or an underflow of the buffer memory 17 can be reduced.

The quantizing circuit 14 quantizes conversion coefficients supplied from the DCT circuit 12. A quantizing step width of the quantizing circuit 14 is controlled in accordance with the control signals SC0 and SC1.

In the quantizing circuit 14, the quantizing step width is adaptively controlled in accordance with the control signals SC0 and SC1 supplied from the control circuit 15 on a macro bloc MB by macro block MB basis.

When a macro block MB is determined to have a complicated pattern in accordance with the control signal SC0, a predetermined value, for example 16, is added to the quantizing step width so as to increase the quantizing step width which is then rounded. As the quantizing step width becomes large, the quantized area becomes small and the variable length encoding circuit 16 in the following stage assigns a code with a short variable length, so that the amount of data which is generated is reduced. Thus, the likelihood that the buffer memory 17 will suffer from an overflow or an underflow can be reduced.

When a macro block MB is determined to have a non-complicated pattern in accordance with the control signal SC0, a quantizing step width to which the above mentioned predetermined value is not added is used.

Increasing the quantizing step width for macro blocks MB of a complicated pattern allows an increase of the amount of data which can be generated for macro blocks MB of a non-complicated pattern. This is equivalent to assigning surplus bits generated due to the reduction of the amount of data for macro blocks MB of a complicated pattern to macro blocks MB of a non-complicated pattern.

When the control signal SC1 is supplied from the control circuit 15, the quantizing step width is adaptively controlled in accordance with the capacity of the write enabled areas of the buffer memory 17 in the same manner as the operation in accordance with the above mentioned control signal SC0. The quantized data is supplied to the variable length encoding circuit 16.

The variable length encoding circuit 16 converts the quantized area data into data with variable length. By the above mentioned DCT, quantization, and conversion into variable length code, the video data DV is compressed. The variable length code is supplied to the buffer memory 17.

The variable length code is written to the buffer memory 17 in accordance with a write address ADW supplied from the control circuit 15. In addition, the above mentioned capacity of the write enabled areas is supplied to the control circuit 15. The variable length code is also read from the buffer memory 17 in accordance with a read address ADR supplied from the control circuit 15. The variable length code is obtained through a terminal 18 and then supplied or transmitted to the following circuit.

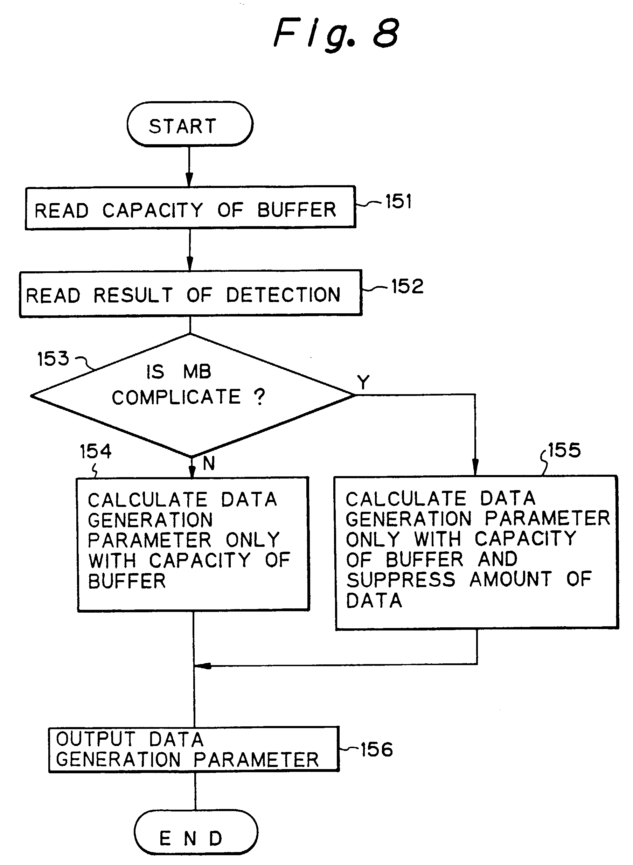

The operation of the control circuit 15 is described with reference to Figure 8.

At step 151, the capacity of the write enabled areas of the buffer memory 17 is read. Then the process is advanced to step 152.

At step 152, it is read whether or not an edge detection signal EDG which at high level being output from the detection circuit 13. Then the process is advanced to step 153.

At step 153, it is determined whether or not the concerned macro block MB has a complicated pattern. When it is determined that the macro block MB does not have a complicated pattern, the process is advanced to step 154. When it is determined that the macro block MB has a complicated pattern, the process is advanced to step 155.

At step 154, the quantizing step width is adaptively controlled in accordance with the capacity of the write enable areas of the buffer memory 17 which is read at step 151. Then the process is advanced to step 156.

At step 155, a predetermined value, for example 16, is added to the quantizing step width formed in accordance with the capacity of the write enable areas of the buffer memory 17 which is read at step 151 for each macro block MB so as to increase the quantising step width. The increased quantizing step width is then rounded. Thereafter, the process is advanced to step 156.

At step 156, the adaptively determined quantizing step width is supplied as a data generation parameter to the quantizing circuit 14 on a macro block MB by macro block MB basis.

According to another encoding apparatus, the complication of a pattern is predetermined on a feed-forward macro block MB by macro block MB basis. When a macro block MB is determined to have a complicated pattern, a predetermined value is added to the quantizing step width so as to increase the quantizing step width. Thus, since the amount of data which is generated for a macro block MB of a complicated pattern can be thereby reduced, abrupt occurrence of a large amount of data from the complicated pattern can be reduced in likelihood and the likelihood of the buffer memory 17 overflowing can also be reduced.

As mentioned above, increasing the quantizing step width for macro blocks MB of complicated patterns allows an increase of the amount of data which can be generated for macro blocks MB of non-complicated patterns. In other words, it is equivalent to assigning surplus bits generated due to the reduction of the amount of data which is generated for the macro blocks MB of the complicated patterns to macro blocks MB of non-complicated patterns. Thus, overall picture quality can be improved.

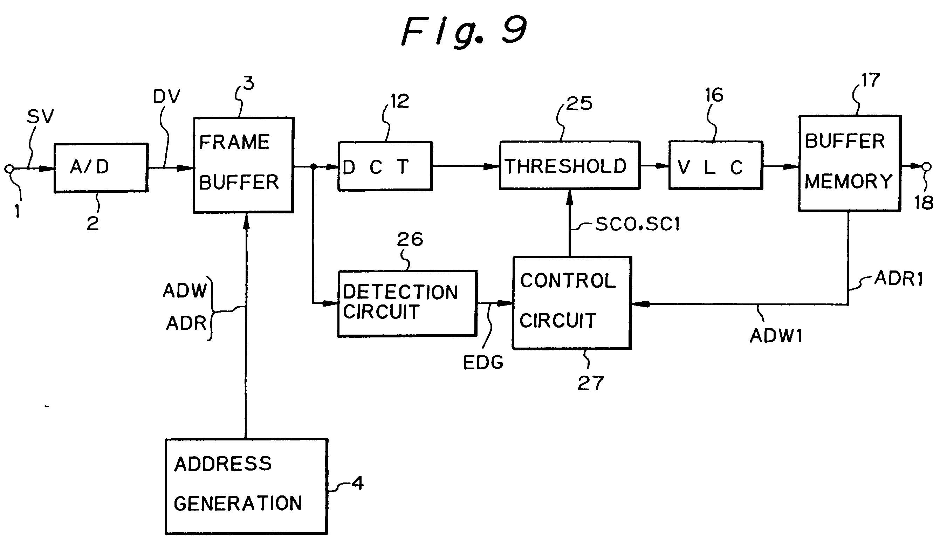

A second encoding apparatus is described with reference to Figure 9.

The difference between this embodiment and the aforementioned embodiment is that the amount of data which is generated is reduced with a threshold circuit 25 instead of the quantizing circuit 14 used in the aforementioned embodiment.

When a macro block MB is classified into blocks BLK of complicated patterns and blocks BLK or non-complicated patterns, the threshold level of the blocks BLK of the complicated pattern is adaptively varied from that of the blocks BLK of non-complicated patterns so that the former is higher than the latter.

With respect to this encoding apparatus, only portions which differ from the aforementioned embodiment are described. The same reference numerals are attached to the portions which are in common with the aforementioned encoding apparatus and any overlapping description is omitted.

A detection circuit 26 determines, block by block (BLK1 to BLK4), whether video data DV supplied from a frame buffer circuit 3 is of complicated pattern or a non-complicated pattern . Each block is formed of 8 x 8 picture elements. The determination technique for the complication of the patterns is the same as that of the aforementioned embodiment. When a particular block BLK1 to BLK4 is determined to have a complicated pattern, the detection circuit 26 supplies an edge detection signal EDG which is at a high level to a control circuit 27.

When the above mentioned detection circuit 13 supplies an edge detection signal EDG which is at high level to the control circuit 15, it forms a control signal SC0 and supplies it to a threshold circuit 25.

Alternatively, when the edge detection signal EDG is at a low level, the control circuit 15 forms a control signal SC1 in accordance with the capacity of the write enabled areas of a buffer memory 17 and supplies the control signal SC1 to a threshold circuit 25.

The threshold circuit 25 adaptively controls the above mentioned threshold level in accordance with the control signal SC0 or the control signal SC1 supplied from the control circuit 27 on a block by block (BLK1 to BLK4) basis. In other words, when a block (BLK1 to BLK4) is determined to have a complicated pattern, the threshold level is raised to a predetermined value.

When conversion coefficients supplied from the DCT circuit 12 exceed the threshold level, the threshold circuit 25 uses the conversion coefficients as they are. When the conversion coefficients are lower than the threshold level, the threshold circuit 25 treats all conversion coefficients supplied from the DCT circuit 12 as "zero data". When the threshold level is raised, the amount of data which is generated is reduced.

Since the other portions of this encoding apparatus are the same as those of the aforementioned encoding apparatus, their overlapping description is omitted.

According to this encoding apparatus, when a block (BLK1 to BLK4) is determined to have a complicated pattern, since the threshold level is raised to a predetermined level, the amount of data which is generated is reduced.

The other effects of this encoding apparatus are the same as those of the aforementioned encoding apparatus.

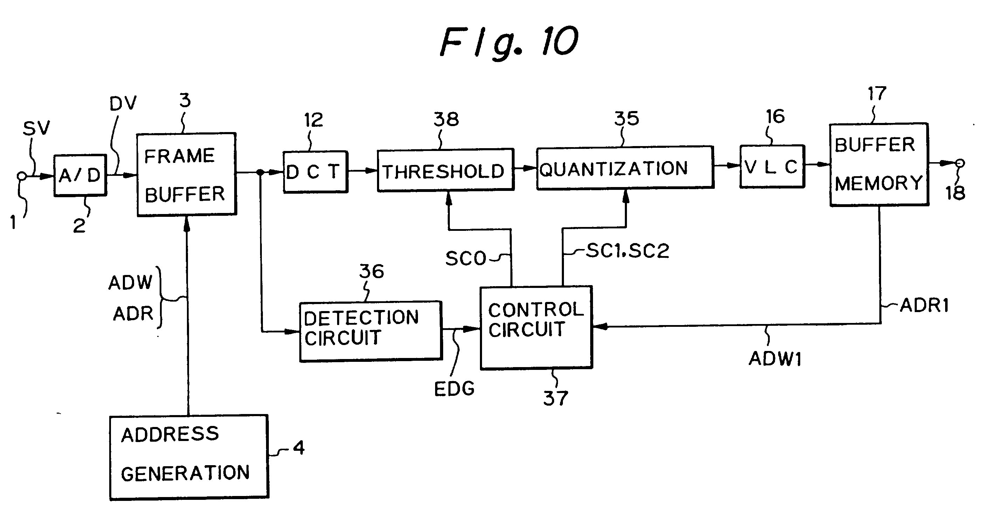

A third encoding apparatus, which is an embodiment of the invention, is described with reference to Figure 10.

The difference between this encoding apparatus and the aforementioned encoding apparatus is that the amount of data which is generated is reduced with a threshold circuit 38 and a quantizing circuit 35. In other words, when a macro block MB can be classified into blocks BLK of complicated patterns and blocks BLK of non-complicated patterns, the threshold level of the blocks BLK of complicated patterns is adaptively varied from that of the blocks BLK or non-complicated patterns so that the former is higher than the latter. In addition, the quantizing step width is adaptively varied macro block MB by macro block MB.

In this encoding apparatus, only portions which differ from the aforementioned encoding apparatus are described. The same reference numerals are attached to the portions which are in common with the aforementioned encoding apparatus and any overlapping description is omitted.

A detection circuit 36 determines, on a block by block basis (BLK1 to BLK4), whether video data DV supplied from a frame buffer circuit 3 is of a complicated pattern or a non-complicated pattern. Each block is formed of 8 x 8 picture elements. The determination technique for the complication of the patterns is the same as that of the aforementioned embodiments. When a block (BLK1 to BLK4) is determined to have a complicated pattern, the detection circuit 26 supplies an edge detection signal EDG which is at high level to a control circuit 27.

When the above mentioned detection circuit 13 supplies an edge detection signal EDG which is at high level to a control signal 37, it forms a control signal SC0 and supplies this to a threshold circuit 25. When the edge detection signal EDG which is at high level satisfies a particular condition, the control circuit 37 supplies a control signal SC2 to the quantizing circuit 35.

Alternatively, when the edge detection signal EDG is at a low level, the control circuit 37 forms a control signal SC1 in accordance with the capacity of the write enabled areas of a buffer memory 17 and supplies the control signal SC1 to a quantizing circuit 35.

The threshold circuit 38 adaptively controls the above mentioned threshold level in accordance with the control signal SCO supplied from the control circuit 37 on a block by block basis (BLK1 to BLK4). When a block (BLK1 to BLK4) is determined to have a complicated pattern, the above mentioned threshold level is raised to the predetermined value.

When conversion coefficients supplied from a DCT circuit 12 exceed the threshold level, the threshold circuit 38 uses the above mentioned conversion coefficients as they are. When the conversion coefficients are lower than the threshold level, the threshold circuit 38 treats the conversion coefficients supplied from the DCT circuit 12 as "zero" data.

The quantizing circuit 35 adaptively controls the quantizing step width in accordance with the control signal SC1 or SC2 supplied from the control circuit 37 on a macro block MB by macro block MB basis. When the quantizing circuit 35 determines that the macro block MB has a complicated pattern block BLK and satisfies a predetermined condition, it adds a particular value, for example 16, to the above mentioned quantizing step width so as to increase the quantizing step width. The increased quantizing step width is then rounded.

Since the other portions of this encoding apparatus are the same as those of the aforementioned encoding apparatus, their overlapping description is omitted.

According to this encoding apparatus, when a macro block MB can be classified into blocks BLK of complicated patterns and blocks BLK of non-complicated patterns, the threshold level of the blocks BLK of complicated patterns is adaptively varied from that of the blocks BLK of non-complicated patterns so that the former is larger than the latter. In addition, the quantizing step width is adaptively varied on a macro block MB by macro block MB basis. Thus, when the threshold level is increased, the amount of data which is generated is reduced. In addition, when the quantizing step width is increased, the quantized data becomes of smaller values and shorter variable length codes may be assigned. Thus, the amount of data which is generated can be further reduced.

The other effects of this encoding apparatus are the same as those of the aforementioned encoding apparatus.

According to at least preferred embodiments of encoding apparatus of this invention, complicated pattern portions of blocks (areas) with predetermined size in a frame of a video signal are determined on a feed-forward basis before the signal is supplied to the encoding means. When a block is determined to have a complicated pattern, the data generation parameter is changed and the quantizing step width of the quantizing means and the threshold level of the threshold means is adaptively controlled. Thus, the amount of data which is generated from complicated pattern portions can be reduced. In addition, the likelihood of the abrupt occurrence of a large amount of data from complicated patterns can be reduced and the likelihood that the buffer memory is overflown can also be reduced. Consequently, the amount of data which is generated for non-complicated pattern portions may increase and the overall picture quality can be improved.

## Claims

1.  An apparatus for encoding an input video signal (SV), the apparatus comprising:

     means (3,4) for dividing each frame of the input video signal into blocks (MB) with a predetermined size;
     an orthogonal transform circuit (12) for transforming the signal values within the blocks into transformed coefficients
     means (38, 35, 16) for sequentially performing, block by block, a thresholding process with a threshold level below which said transformed coefficients are substituted with zeros, then a quantizing process with a quantization step width and then an encoding process upon the blocks, the threshold level and the quantization step width varying in accordance with the input video signal to control the amount of encoded data which is generated; and
     means (13) for determining, block by block, the complication of the pattern within the blocks, the threshold level and the quantization step width for a given block being varied in accordance with the result of the determination for said given block by the means for determining.

2.  An apparatus according to claim 1, wherein the means (13) for determining detects the presence of an edge in sample blocks (SBxy) within the blocks, the presence of an edge being determined to be indicative of a complicated pattern.

3. An apparatus according to claim 2, wherein the means (13) for determining uses a plurality of sample blocks within each block, detects the presence of an edge in each of the sample blocks, and determines that the pattern within the block is a complicated pattern when the number of sample blocks in which an edge exists exceeds a predetermined number.

4. An apparatus according to any one of claims 2 or 3, wherein the means (13) for determining detects an edge by calculating the square of the difference of luminance levels of diagonally opposite corner elements of a sample block.

5. An apparatus according to claim 4, wherein, when the difference of luminance levels of the diagonal elements is 25% or more of the dynamic range of luminance, it is determined that an edge is present in the sample block.

6. A method of encoding an input video signal, the method comprising the steps of:

dividing each frame of the input video signal into blocks with a predetermined size;
performing an orthogonal transform on the signal values within the blocks to form transformed coefficients;
sequentially performing, block by block, a thresholding process with a threshold level below which said transformed coefficients are substituted with zeros, then a quantizing process with a quantization step width and then an encoding process upon the blocks, the threshold level and the quantization step width varying in accordance with the input video signal to control the amount of encoded data that is generated; and
determining, block by block, the complication of the pattern within the blocks, the threshold level and the quantization step width used for a given block being varied in accordance with the result of the determination for said given block.

7. A method according to claim 6, wherein the step of determining detects the presence of an edge in sample blocks (SBxy) within the blocks, the presence of an edge being determined to be indicative of a complicated pattern.

8. A method according to claim 7, wherein the step of determining uses a plurality of sample blocks within each block, detects the presence of an edge in each of the sample blocks, and determines that the pattern within the block is a complicated pattern when the number of sample blocks in which an edge exists exceeds a predetermined number.

9. A method according to any one of claims 7 or 8, wherein the step of determining detects an edge by calculating the square of the difference of luminance levels of diagonally opposite corner elements of a sample block.

10. A method according to claim 9, wherein, when the difference of luminance levels of the diagonally opposite corner elements is 25% or more of the dynamic range of luminance, it is determined that an edge is present in the sample block.

**Patentansprüche**

1. Vorrichtung zur Codierung eines Eingangs-Videosignales (SV), mit:

einer Einrichtung (3, 4) zur Aufteilung jedes Vollbildes des Eingangs-Videosignales in Blöcke (MB) vorbestimmter Größe;
einer Orthogonaltransformationsschaltung (12) zur Transformation der Signalwerte innerhalb der Blöcke in transformierte Koeffizienten;
einer Einrichtung (38, 35, 16) zur sequentiellen blockweisen Durchführung eines Schwellenwertvorganges mit einem Schwellenwertpegel, unterhalb dem die transformierten Koeffizienten durch Null ersetzt werden, dann eines Quantisierungsvorganges mit einer Quantisierungsschrittlänge und schließlich eines Codiervorganges der Blöcke, wobei der Schwellenwertpegel und die Quantisierungsschrittlänge gemäß den Eingangs-Videosignalen variiert werden, um die erzeugte Codierdatenmenge zu steuern; und
einer Einrichtung (13) zur blockweisen Feststellung der Kompliziertheit von dem Muster innerhalb der Blöcke, wobei der Schwellenwertpegel und die Quantisierungsschrittlänge für einen gegebenen Block abhängig von dem Ergebnis der Feststellung für den gegebenen Block durch die Feststellungseinrichtung verändert werden.

**2.** Vorrichtung nach Anspruch,
bei der die Einrichtung (13) zur Festlegung das Vorhandensein einer Kante in Abtastblöcken (SBxy) innerhalb der Blöcke feststellt, wobei das Vorhandensein einer Kante ein kompliziertes Muster anzeigt.

**3.** Vorrichtung nach Anspruch 2,
bei der die Einrichtung (13) zur Feststellung mehrere Abtastblöcke innerhalb jedes Blockes verwendet, das Vorhandensein einer Kante in jedem der Abtastblöcke erfaßt und feststellt, daß das Muster innerhalb des Blockes ein kompliziertes Muster ist, wenn die Anzahl der Abtastblöcke mit einer Kante in ihm eine vorbestimmte Anzahl überschreitet.

**4.** Vorrichtung nach einem der Ansprüche 2 oder 3,
wobei die Einrichtung (13) zur Feststellung eine Kante durch Berechnung des Quadrates der Differenz der Luminanzpegel von diagonal gegenüberliegenden Eckelementen eines Abtastblockes erfaßt.

**5.** Vorrichtung nach Anspruch 4,
bei der, wenn die Differenz von Luminanzpegeln der Diagonalelemente 25% oder mehr des Dynamikbereiches der Luminanz ist, festgestellt wird, daß eine Kante in dem Abtastblock festliegt.

**6.** Verfahren zur Codierung eines Eingangs-Videosignales, wobei das Verfahren die folgenden Schritte aufweist:

Aufteilen jedes Vollbildes des Eingangs-Videosignales in Blöcke vorbestimmter Größe; Durchführung einer Orthogonaltransforrnation der Signalwerte innerhalb der Blöcke zur Bildung transformierter Koeffizienten; sequentielle blockweise Durchführung eines Schwellenwertvorganges mit einem Schwellenwertpegel, unterhalb dem die transformierten Koeffizienten durch Nullen ersetzt werden, dann einem Quantisiervorgang mit einer Quantisierschrittlänge und schließlich eines Codiervorganges für die Blöcke, wobei der Schwellenwertpegel und die Quantisierungsschrittlänge in Abhängigkeit von dem Eingangs-Videosignal zur Steuerung der erzeugten Codierdatenmenge verändert werden; und blockweise Feststellung der Kompliziertheit der Muster innerhalb des Blöcke, wobei der Schwellenwertpegel und die Quantisierungsschrittlänge, die für einen gewissen Block verwendet werden, abhängig von dem Ergebnis der Festlegung für diesen Block verändert werden.

**7.** Verfahren nach Anspruch 6,
bei dem der Schritt der Festlegung das Vorhandensein einer Kante in einem Absatzblock (SBxy) innerhalb der Blöcke erfaßt, wobei das Vorhandensein einer Kante ein kompliziertes Muster anzeigt.

**8.** Verfahren nach Anspruch 7,
bei dem der Schritt der Festlegung mehrere Abtastblöcke innerhalb jedes Blockes verwendet, das Vorhandensein einer Kante in jedem der Abtastblöcke erfaßt und festlegt, daß das Muster innerhalb des Blockes ein kompliziertes Muster ist, wenn die Anzahl von Abtastblöcken, in denen eine Kante vorliegt, eine vorbestimmte Anzahl überschreitet.

**9.** Verfahren gemäß einem der Ansprüche 7 oder 8,
wobei der Schritt der Festlegung eine Kante durch Berechnung des Quadrates des Unterschiedes der Luminanzpegel von diagonal gegenüberliegenden Eckelementen eines Abtastblockes erfaßt.

**10.** Verfahren nach Anspruch 9,
bei dem, wenn der Unterschied der Luminanzpegel der diagonal gegenüberliegenden Eckelemente 25% oder mehr des Dynamikbereiches der Luminanz ist, festgestellt wird, daß in dem Abtastblock eine Kante vorliegt.

**Revendications**

**1.** Dispositif pour coder un signal vidéo d'entrée (SV), le dispositif comprenant :

un moyen (3, 4) pour diviser chaque trame du signal vidéo d'entrée en blocs (MB) d'une taille prédéterminée ;
un circuit de transformation orthogonale (12) pour transformer les valeurs de signal dans les blocs en coefficients transformés ;
un moyen (38, 35, 16) pour exécuter séquentiellement, bloc par bloc, un traitement d'établissement de seuil à un niveau de seuil au-dessous duquel les coefficients transformés sont remplacés par des zéros, ensuite un traitement de quantification avec une largeur de pas de quantification et ensuite un traitement de codage sur les blocs, le niveau de seuil et la largeur du pas de quantification variant selon le signal vidéo d'entrée pour commander la quantité de données codées qui sont engendrées ; et,

un moyen (13) pour déterminer, bloc par bloc, la complication de la forme dans les blocs, le niveau de seuil et la largeur du pas de quantification pour un bloc donné étant changés selon le résultat de la détermination pour ledit bloc donné par le moyen de détermination.

2. Dispositif selon la revendication 1, dans lequel le moyen de détermination (13) détecte la présence d'un bord dans des blocs d'échantillonnage (SBxy) à l'intérieur des blocs, la présence d'un bord étant déterminée comme étant indicative d'une forme compliquée.

3. Dispositif selon la revendication 2, dans lequel le moyen de détermination (13) utilise une pluralité de blocs d'échantillonnage dans chaque bloc, détecte la présence d'un bord dans chacun des blocs d'échantillonnage, et détermine que la forme dans le bloc est une forme compliquée quand le nombre de blocs d'échantillonnage dans lesquels il existe un bord dépasse un nombre prédéterminé.

4. Dispositif selon l'une quelconque des revendications 2 et 3, dans lequel le moyen de détermination (13) détecte un bord en calculant le carré de la différence des niveaux de luminance des éléments de coin diagonalement opposés d'un bloc d'échantillonnage.

5. Dispositif selon la revendication 4, dans lequel, quand la différence des niveaux de luminance des éléments en diagonale est égale à 25 % ou plus de la plage dynamique de luminance, il est déterminé qu'un bord est présent dans le bloc d'échantillonnage.

6. Procédé de codage d'un signal vidéo d'entrée, ce procédé comprenant les étapes qui consistent à :

diviser chaque trame du signal vidéo d'entrée en blocs d'une taille prédéterminée ;

exécuter une transformation orthogonale sur les valeurs de signal dans les blocs pour former des coefficients transformés ;

exécuter séquentiellement, bloc par bloc, un traitement d'établissement de seuil à un niveau de seuil au-dessous duquel lesdits coefficients transformés sont remplacés par des zéros, ensuite un traitement de quantification avec une largeur de pas de quantification et ensuite un traitement de codage sur les blocs, le niveau de seuil et la largeur du pas de quantification variant selon le signal vidéo d'entrée pour commander la quantité des données codées qui sont engendrées ; et,

déterminer, bloc par bloc, la complication de la forme dans les blocs, le niveau de seuil et la largeur du pas de quantification utilisé pour un bloc donné étant changés selon le résultat de la détermination pour ledit bloc donné.

7. Procédé selon la revendication 6, dans lequel l'étape de détermination détecte la présence d'un bord dans des blocs d'échantillonnage (SBxy) à l'intérieur des blocs, la présence d'un bord étant déterminée comme étant indicative d'une forme compliquée.

8. Procédé selon la revendication 7, dans lequel l'étape de détermination utilise une pluralité de blocs d'échantillonnage dans chaque bloc, détecte la présence d'un bord dans chacun des blocs d'échantillonnage, et détermine que la forme dans le bloc est une forme compliquée quand le nombre de blocs d'échantillonnage dans lesquels il existe un bord dépasse un nombre prédéterminé.

9. Procédé selon l'une quelconque des revendications 7 et 8, dans lequel l'étape de détermination détecte un bord en calculant le carré de la différence des niveaux de luminance des éléments de coin diagonalement opposés d'un bloc d'échantillonnage.

10. Procédé selon la revendication 9, dans lequel, quand la différence des niveaux de luminance des éléments de coin diagonalement opposés est égale à 25 % ou plus de la plage dynamique de luminance, il est déterminé qu'un bord est présent dans le bloc d'échantillonnage.

# Fig. 1

EP 0 498 656 B1

# Fig. 2

EP 0 498 656 B1

# Fig. 3

# Fig. 4

# Fig. 5

AR3

AR2

AR1

AMOUNT
OF DATA

AR1

X

X

EP 0 498 656 B1

# Fig. 6

# Fig. 7

# Fig. 8

START

READ CAPACITY OF BUFFER ——151

READ RESULT OF DETECTION ——152

153 — IS MB COMPLICATE ?

154 — N

155

CALCULATE DATA GENERATION PARAMETER ONLY WITH CAPACITY OF BUFFER

CALCULATE DATA GENERATION PARAMETER ONLY WITH CAPACITY OF BUFFER AND SUPPRESS AMOUNT OF DATA

Y

OUTPUT DATA GENERATION PARAMETER ——156

END

Fig. 9

EP 0 498 656 B1

## F I g. 10

EP 0 498 656 B1